# FASCICULE DE BREVET EUROPEEN

(11) **EP 2 579 545 B1**
(45) Date de publication et mention de la délivrance du brevet: **17.05.2017**
(21) Numéro de dépôt: 12187279.0
(22) Date de dépôt: 04.10.2012
(51) Int. Cl.: H04L 29/12, H04L 12/46

(54) **MÉTHODE D'ATTRIBUTION D'UNE ADRESSE RÉSEAU PUBLIQUE À UN ÉQUIPEMENT DISPOSANT D'UNE ADRESSE RÉSEAU PRIVÉE**
ZUTEILUNGSMETHODE EINER ÖFFENTLICHEN NETZADRESSE AN EIN GERÄT, DAS ÜBER EINE PRIVATE NETZADRESSE VERFÜGT
METHOD OF ASSIGNING A PUBLIC NETWORK ADDRESS TO EQUIPMENT WITH A PRIVATE NETWORK ADDRESS

(30) Priorité: 05.10.2011 FR 1158995
(43) Date de publication de la demande: 10.04.2013
(73) Titulaire: Bouygues Telecom, 75116 Paris (FR)
(72) Inventeur: Virassamy, Daniel, 78400 Chatou (FR)
(74) Mandataire: Regimbeau

(56) Documents cités:
- YAMAGATA Y SHIRASAKI NTT COMMUNICATIONS A NAKAGAWA JAPAN INTERNET EXCHANGE (JPIX) J YAMAGUCHI IIJ H ASHIDA ITSCOM I: "NAT444; draft-shirasaki-nat444-04.txt", NAT444; DRAFT-SHIRASAKI-NAT444-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 11 juillet 2011 (2011-07-11), pages 1-10, XP015077332,
- DONLEY CABLELABS L HOWARD TIME WARNER CABLE V KUARSINGH ROGERS COMMUNICATIONS A CHANDRASEKARAN V GANTI UNIVERSITY OF COLORADO C: "Assessing the Impact of NAT444 on Network Applications; draft-donley-nat444-impacts-01.txt", ASSESSING THE IMPACT OF NAT444 ON NETWORK APPLICATIONS; DRAFT-DONLEY-NAT444-IMPACTS-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 26 octobre 2010 (2010-10-26), pages 1-12, XP015072347,
- ARKKO ERICSSON M TOWNSLEY CISCO J: "IPv4 Run-Out and IPv4-IPv6 Co-Existence Scenarios; rfc6127.txt", IPV4 RUN-OUT AND IPV4-IPV6 CO-EXISTENCE SCENARIOS; RFC6127.TXT, INTERNET ENGINEERING TASK FORCE, IETF; STANDARD, INTERNET SOCIETY (ISOC) 4, RUE DES FALAISES CH- 1205 GENEVA, SWITZERLAND, 26 mai 2011 (2011-05-26), pages 1-20, XP015076020,

## Description

### DOMAINE TECHNIQUE GENERAL

La présente invention concerne le domaine des protocoles internet.

Plus précisément, elle concerne une méthode d'attribution d'une adresse réseau publique à un équipement auquel est associée une adresse réseau privée, un dispositif d'accès internet et un système à cet effet.

### ETAT DE L'ART

Chaque équipement connecté à l'internet est identifié par une adresse réseau dite adresse IP (Internet Protocol). IPv4 est le premier standard de représentation d'adresses IP largement déployé. Ce standard est tel qu'au maximum 4 294 967 296 adresses peuvent être attribuées simultanément en théorie. Or, ce nombre d'adresses est sur le point d'être atteint. Cet épuisement des adresses IPv4 menace la croissance du réseau internet.

En attendant l'arrivée du standard IPv6, prévu pour succéder à IPv4 et qui possède une capacité d'adressage des milliards de fois supérieure à IPv4, les opérateurs sont amenés à optimiser l'utilisation et la distribution de l'ensemble d'adresses IPv4 dont ils disposent.

En effet, à chaque instant seule une fraction des équipements est effectivement connectée à l'internet, et le plus souvent via un routeur (fonction que possèdent en effet les IAD (« Integrated Access Device »), c'est-à-dire les boitiers d'accès à internet, couramment appelés « box », proposés par les fournisseurs d'accès à internet), souvent appelé « Customer Edge » (CE). Lorsque ce dernier fonctionne dans le mode dit « routé », plutôt que d'attribuer à chaque équipement de manière fixe l'une des adresses IP disponibles, il a été proposé de leur affecter derrière leur routeur une adresse IP dite « privée », dont l'unicité n'est nécessaire qu'à l'intérieur d'un même domaine IP (ainsi, nombre d'équipements possèdent une adresse privée classique du type 192.168.0.0/16), et d'utiliser un mécanisme appelé NAT44 (Network Address Translation) grâce auquel le routeur fait correspondre un couple adresse IP « privée » (c'est à dire une adresse unique au même domaine IP et non routable sur l'Internet) + port d'un équipement à un couple adresse IP « publique » (c'est-à-dire l'une des adresses externes uniques et routables sur l'Internet qui sont disponibles) + port. Ce mécanisme permet notamment de faire correspondre une seule adresse IP publique visible sur internet à toutes les adresses d'un réseau privé, et pallie ainsi temporairement à l'épuisement des adresses IPv4.

Pour optimiser encore la distribution d'adresses IPv4, toujours avec une box fonctionnant dans ce mode « routé », il a été proposé un deuxième niveau de NAT, ce mécanisme étant connu sous le nom de NAT444, divulguée par le document XP015077332, "NAT444; draft-shirasaki-nat444-04.txt". L'idée est de déléguer à une unité appelée le CGN (Carrier Grade NAT) l'attribution à grande échelle d'adresses IP publiques pour un grand nombre de routeurs (box) et donc d'équipements. Le premier niveau de NAT (se situant toujours au niveau du routeur) fait correspondre à un couple adresse IP privée + port de l'équipement un couple adresse IP privée (qui n'a toujours pas besoin d'être routable sur l'Internet, et qui est seulement unique pour le sous-réseau dépendant du CGN) + port, et le deuxième niveau de NAT (se situant au niveau du CGN) fait correspondre au nouveau couple adresse IP privée + port un couple adresse IP publique + port. Il n'y a alors plus besoin d'attribuer au moins une adresse IP publique par routeur, et il suffit d'un pool d'adresses IP publiques pour chaque CGN. Le point faible de cette solution est que la plupart des techniques d'adaptation du NAT aux services internet ont été développées pour du NAT44 (un seul niveau de NAT) et non pour du NAT444 (plusieurs niveau de NAT). De nombreux services depuis l'accès à certain sites web jusqu'au peer-to-peer en passant par les plateformes de jeux en réseau souffrent ainsi d'incompatibilité avec le NAT444 lorsqu'il est mis en oeuvre, et voient leur fonctionnement perturbé voire rendu impossible.

Il serait donc souhaitable de disposer d'une nouvelle méthode d'attribution dynamique d'une adresse réseau publique à un équipement possédant une adresse réseau privée, qui soit d'une part moins gourmande en nombre d'adresses publiques que les méthodes connues, et d'autre part qui soit compatible avec tous les services internet.

### PRESENTATION DE L'INVENTION

Selon un premier aspect, la présente invention se rapporte donc à une méthode d'attribution d'une adresse réseau publique à une pluralité d'équipements, chacun des équipements disposant d'une adresse réseau privée et étant reliés à l'internet via un routeur apte à procéder à une première translation d'adresse réseau, la méthode étant caractérisée en ce qu'elle comprend la mise en oeuvre des étapes suivantes lorsqu'un équipement souhaite accéder à un service internet :
- détermination si ledit service internet est compatible avec une deuxième translation d'adresse réseau pouvant être mise en oeuvre par une passerelle reliée à l'internet ;
- s'il y a compatibilité du service internet avec la deuxième translation d'adresse réseau :
   ∘ première translation de l'adresse réseau privée associée à l'équipement en une nouvelle adresse réseau privée choisie parmi une liste d'adresses réseau privées dont dispose le routeur de l'équipement ;
   ∘ mise en communication du routeur et de la passerelle,
   ∘ deuxième translation de ladite nouvelle adresse réseau privée de l'équipement en une adresse réseau publique choisie parmi une liste d'adresses réseau publiques dont dispose la passerelle ;
- s'il n'y a pas compatibilité du service internet avec la deuxième translation d'adresse réseau :
   ∘ première translation de l'adresse réseau privée de l'équipement en une adresse réseau publique choisie parmi une liste d'adresses réseau publiques supplémentaires partagée entre les routeurs de ladite pluralité d'équipements.

Selon un deuxième aspect, la présente invention se rapporte à une méthode d'attribution d'une adresse réseau publique à une pluralité d'équipements, chacun des équipements disposant d'une adresse réseau privée et étant reliés à l'internet via un routeur apte à procéder à une première translation d'adresse réseau, la méthode étant caractérisée en ce qu'elle comprend la mise en oeuvre des étapes suivantes lorsqu'un équipement souhaite accéder à un service internet :
- détermination si ledit service internet est compatible avec une deuxième translation d'adresse réseau pouvant être mise en oeuvre par une passerelle reliée à l'internet ;
- s'il y a compatibilité du service internet avec la deuxième translation d'adresse réseau :
   ∘ tunnelisation du flux de données échangées pour accéder audit service internet entre le routeur de l'équipement et la passerelle ;
   ∘ deuxième translation de l'adresse réseau privée de l'équipement en une adresse réseau publique choisie parmi une liste d'adresses réseau publiques dont dispose la passerelle ;
- s'il n'y a pas compatibilité du service internet avec la deuxième translation d'adresse réseau :
   ∘ première translation de l'adresse réseau privée de l'équipement en une adresse réseau publique choisie parmi une liste d'adresses réseau publiques supplémentaires partagée entre les routeurs de ladite pluralité d'équipements.

Selon d'autres caractéristiques avantageuses et non limitatives de la méthode selon le premier ou le deuxième aspect :
- l'adresse réseau privée associée à l'équipement, ladite nouvelle adresse réseau privée et les adresses de la liste d'adresses réseau publiques supplémentaires sont des adresses IPv4 ou des adresses IPv6 ;
- l'adresse réseau privée associée à l'équipement et les adresses de la liste d'adresses réseau publiques supplémentaires sont des adresses IPv4 ou des adresses IPv6 ;
- ladite étape de tunnelisation comprend l'encapsulation des paquets IPv4 transitant entre le routeur et la passerelle dans des paquets IPv6 ;
- le routeur de chaque équipement dispose d'une liste de services internet non compatibles avec ladite deuxième translation d'adresse réseau, l'étape de détermination si ledit service est compatible avec ladite deuxième translation d'adresse réseau consistant en la vérification que le service auquel l'équipement souhaite accéder n'est pas présent dans ladite liste de services internet non compatibles ;
- le routeur de chaque équipement dispose d'au moins une sonde logicielle apte à identifier au moins un type de service internet ;
- la méthode comprend en outre une étape supplémentaire de déclenchement d'une alerte et/ou d'enregistrement de données dans un historique d'événements par le routeur d'un équipement lorsque ledit équipement ne parvient pas à accéder à un service pourtant déterminé comme compatible avec la deuxième translation d'adresse réseau ;
- l'étape de déclenchement d'une alerte et/ou d'enregistrement de données dans un historique d'événements s'accompagne de l'ajout dans ladite liste de services internet non compatibles avec ladite deuxième translation d'adresse réseau du service internet ayant déclenché l'alerte ;
- le routeur de chaque équipement est un dispositif d'accès internet proposé par un fournisseur d'accès internet, l'étape de déclenchement d'une alerte et/ou d'enregistrement de données dans un historique d'événements s'accompagnant de la notification du service internet ayant déclenché l'alerte à un serveur du fournisseur d'accès internet ;
- la liste de services internet non compatibles avec ladite deuxième translation d'adresse réseau est régulièrement mise à jour par ledit serveur du fournisseur accès, la liste mise à jour de services internet non compatibles comprenant le ou les services internet notifiés au serveur du fournisseur d'accès ;
- l'adresse réseau publique choisie parmi une liste d'adresses réseau publiques supplémentaires partagée entre les routeurs de ladite pluralité d'équipements est fournie pour une durée limitée ;
- ladite durée limitée est fonction du nombre total d'adresses de la liste d'adresses réseau publiques supplémentaires partagée, et du nombre d'adresses disponibles de la liste ;
- ladite durée limitée de fourniture d'une adresse réseau publique est également fonction de l'heure et du jour ;
- certains des routeurs de la pluralité d'équipements entre lesquels la liste d'adresses réseau publiques supplémentaires est partagée disposent d'au moins une adresse réservée parmi les adresses de la liste ;
- l'étape de première translation de l'adresse réseau privée de l'équipement en une adresse réseau publique choisie parmi une liste d'adresses réseau publiques supplémentaires partagée entre les routeurs de ladite pluralité d'équipements comprend l'ouverture d'une nouvelle connexion internet entre le routeur de l'équipement et un serveur indiqué par le serveur gérant la liste d'adresses réseau publiques supplémentaires ;
- le routeur est apte à établir une connexion à l'internet via un réseau principal ou via un réseau alternatif, l'étape de première translation de l'adresse réseau privée de l'équipement en une adresse réseau publique choisie parmi une liste d'adresses réseau publiques supplémentaires partagée entre les routeurs de ladite pluralité d'équipements étant retentée via le réseau alternatif en cas d'échec via le réseau principal.

Un troisième et un quatrième aspect de l'invention concernent respectivement un dispositif d'accès internet destiné à relier en tant que routeur au moins un équipement à l'internet, caractérisé en ce qu'il est configuré pour mettre en oeuvre la méthode selon le premier ou le deuxième aspect de l'invention lorsque l'au moins un équipement souhaite accéder à un service internet, et un système comprenant au moins un dispositif d'accès internet selon le troisième aspect de l'invention, une pluralité d'équipements reliés à l'internet via l'au moins un dispositif d'accès internet, une passerelle également relié à l'internet, et un serveur de gestion de la liste d'adresses réseau publiques supplémentaires.

L'invention est réalisée par le méthodes du revendications indépendantes 1 et 3 et le système du revendication indépendante 14.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma de l'environnement réseau dans lequel est mise en oeuvre par la méthode selon l'invention ;
- la figure 2 est un schéma des deux niveaux de NAT mis en oeuvre dans la méthode selon l'invention ;
- la figure 3 est un schéma représentant l'architecture logicielle intégrée au dispositif d'accès internet selon l'invention ;
- la figure 4 représente un diagramme flux ou « call flow » entre les différents éléments du réseau lors de l'utilisation d'une sonde logicielle ;
- la figure 5 représente un diagramme flux ou « call flow » entre les différents éléments du réseau lors de la mise en oeuvre de la méthode selon l'invention ;
- la figure 6 représente un diagramme flux ou « call flow » lors de la mise en oeuvre d'un mode de réalisation particulier de la méthode selon l'invention.

### DESCRIPTION DETAILLEE

### Principe de l'invention

Comme expliqué précédemment, la difficulté pour assurer la connectivité de bout en bout des différentes technologies du web provient du manque d'adresses IPv4 publiques routables sur l'Internet. L'invention propose donc une solution d'attribution d'adresse IP publique orientée services internet, qui contrairement à une approche classique orientée équipement réseau peut s'adapter à toutes les technologies du Web, y compris celles à venir. Ces services font appel à diverses technologies réseaux tels que la tunnelisation, la sécurisation des flux, le NAT traversal, le multi socket, le peer to peer entre autres, sur une connectivité IPv4 privée ou publique et qui sont intéressantes à prendre en compte lors de la définition de la solution d'optimisation de distribution d'adresses IPv4.

Or, la demanderesse a constaté que malgré le volume colossal de contenus internet, le nombre de services différents pertinents à surveiller était seulement de l'ordre de 13000, que l'on pouvait classer en sept grandes catégories :
- WEB : essentiellement du trafic http vers des serveurs IPv4 et/ou IPv6, parmi lesquels les services problématiques peuvent être par exemple les sites de sauvegardes de contenus (Megaupload, rapidshare, etc.) ou les sites de streaming vidéo ;
- Réseaux sociaux (facebook, twitter, etc.) : accès à des sites offrant une connectivité vers plusieurs services WEB2.0 ;
- Plateformes commerciales : installation de clients sur les postes utilisateurs, ces clients se connectant à des plateformes d'échanges commerciaux (par exemple iTunes) ;
- Plateformes de jeux en réseaux : installation de jeux en réseaux ou branchement de consoles de jeux ayant un accès au WEB. Quelques grands acteurs : STEAM, BattleNET, toutes les consoles de dernière génération ;
- Plateformes multimédia : installation de clients sur les postes utilisateurs permettant l'accès à des services multimédia : audio/vidéo. Quelques grands acteurs: FTP, SIP/Freephonie, SIP/Ekiga, Apple TV, Google TV, MSN Messenger, Yahoo Messenger, AIM, Skype, etc.
- Services Cloud : services simplifiés de partage, de synchronisation et de sauvegarde de données. Quelques grands acteurs : Windows Cloud, Apple iCloud ;
- Peer to Peer : échanges de données en point à point utilisant des protocoles P2P. Quelques grands acteurs : eMule, Bit Torrent, myp2p ...

Une pré-étude de ces catégories de services a permis d'identifier que pour le moment seulement une cinquantaine de services semblaient souffrir d'incompatibilité (lenteur, interruption de service) avec le NAT444. L'utilisation de la majorité des services via NAT444 ne pose pas de problème. L'idée est donc de disposer d'un double niveau de NAT dont le premier niveau est un NAT444, un mécanisme permettant le « bypass » (terme anglo-saxon signifiant le court-circuitage) de ce premier niveau (c'est-à-dire le basculement sur le second niveau) en cas d'implication d'un service que l'on sait incompatible

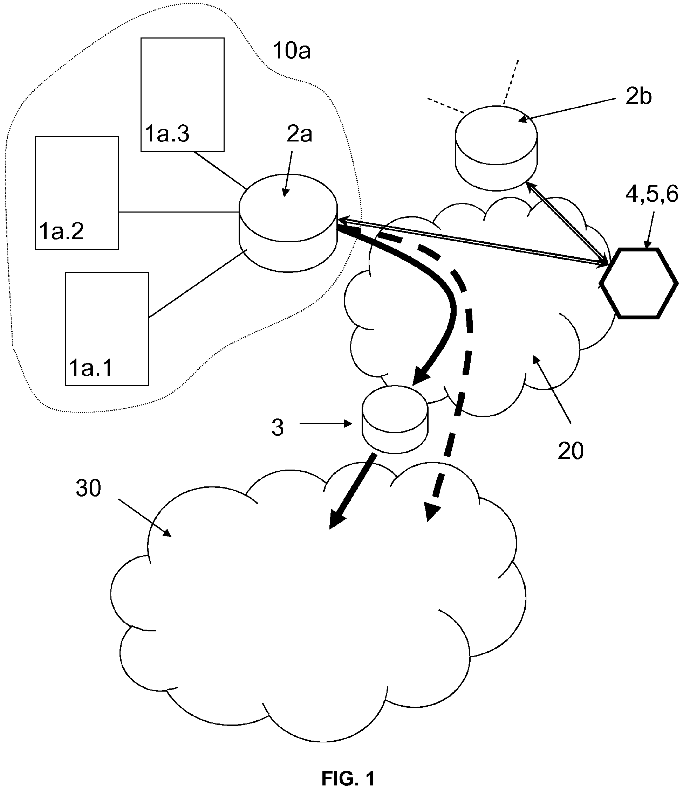

En référence en particulier à la figure 1, l'invention consiste ainsi en une méthode d'attribution d'une adresse réseau publique à une pluralité d'équipements 1a.1, 1a.2, 1a.3 (on comprendra par « attribution » d'une adresse réseau publique à un équipement 1 que l'adresse est mise à disposition d'un autre équipement réseau (en particulier le routeur 2) qui pourra effectuer la translation d'adresse réseau. Les équipements restent en effet naturellement toujours en adresse privée dans le domaine IP et n'ont pas connaissance des adresses réseau publiques dont ils bénéficient, ce sont les routeurs 2 et passerelles 3 qui les obtiennent), chacun des équipements 1a.1, 1a.2, 1a.3 disposant d'une adresse réseau privée et étant reliés à l'internet 30 via un routeur 2a, 2b (par convention, les équipements 1a.X sont les équipements reliés au routeur 2a, les équipements 1b.X sont les équipement reliés au routeur 2b, etc.) apte à procéder à une première translation d'adresse réseau, la méthode étant caractérisée en ce qu'elle comprend la mise en oeuvre des étapes suivantes lorsqu'un équipement 1 souhaite accéder à un service internet :
- détermination si ledit service internet est compatible avec une deuxième translation d'adresse réseau pouvant être mise en oeuvre par une passerelle 3 reliée à l'internet 30 ;
- s'il y a compatibilité du service internet avec la deuxième translation d'adresse réseau :
   ∘ première translation de l'adresse réseau privée associée à l'équipement 1 en une nouvelle adresse réseau privée choisie parmi une liste d'adresses réseau privées dont dispose le routeur 2 de l'équipement 1 ;
   ∘ mise en communication du routeur 2 et de la passerelle 3 ;
   ∘ deuxième translation de ladite nouvelle adresse réseau privée de l'équipement 1 en une adresse réseau publique choisie parmi une liste d'adresses réseau publiques dont dispose la passerelle 3 ;
- s'il n'y a pas compatibilité du service internet avec la deuxième translation d'adresse réseau :
   ∘ première translation de l'adresse réseau privée de l'équipement 1 en une adresse réseau publique choisie parmi une liste d'adresses réseau publiques supplémentaires partagée entre les routeurs 2a, 2b de ladite pluralité d'équipements 1a.1, 1a.2, 1a.3.

Ce mécanisme permet le contournement (ou « bypass ») lorsque nécessaire de l'équipement appelé « passerelle » 3, en particulier un « CGN » (Carrier Grade NAT), dont l'utilisation (en NAT444 par exemple) est désignée ici comme « deuxième translation d'adresse réseau ». On comprendra dans la suite de la présente description par « deuxième translation d'adresse réseau » le recours à toute translation d'adresse réseau par un équipement (la passerelle 3) derrière lequel un routeur 2 en mode routé met en oeuvre une translation d'adresse réseau ou une tunnelisation. Il peut donc dans ce second cas ne pas y avoir de « première translation d'adresse réseau ». Ce cas sera décrit plus loin dans la présente description. L'homme du métier gardera donc en tête que la présente invention n'est en aucune manière limitée au cas du NAT444, et qu'on désignera par seconde translation d'adresse réseau une translation mise en oeuvre au niveau d'une passerelle 3 tel un CGN même s'il n'y a pas de première translation d'adresse réseau.

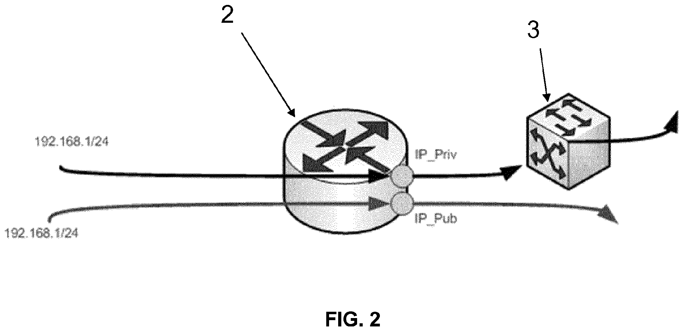

Le procédé selon l'invention tient compte des points forts et des points faibles de l'utilisation d'un CGN 3 : en cas de requête d'accès à un service dont l'incompatibilité est détectée, la méthode d'attribution d'une adresse réseau publique selon l'invention bascule comme représenté sur la figure 2 vers un niveau de NAT44 (« première translation d'adresse réseau ») qui offre une connectivité « de secours ».

Comme expliqué précédemment, l'implémentation des NAT implique la présence d'un périphérique central de type routeur 2, fonctionnant en mode routé et non bridgé, pour interconnecter des équipements 1 (qui peuvent être tout appareil pouvant exploiter une connexion avec le réseau, en particulier des postes de travail individuels, consoles de jeux, appareils domestiques communiquant) à internet. En amont des routeurs 2 (c'est-à-dire au niveau des réseaux locaux entre les équipements et leurs routeurs, appelés réseaux « privés »), les équipements disposent d'adresses réseau privées. En IPv4, les plages privées d'adressage IP sont définies par la « RFC1918 » : 10.0.0.0 - 10.255.255.255, 172.16.0.0 - 172.31.255.255 et 192.168.0.0 - 192.168.255.255. Ces adresses ne sont pas routables sur internet.

La passerelle 3 dispose d'un pool d'adresses réseau publiques pour les routeurs de la pluralité d'équipements. La deuxième translation d'adresse réseau s'opère entre un réseau 20 dit « opérateur » (qui correspond au réseau entre les routeurs 2 et la passerelle 3, ce réseau étant mis en oeuvre généralement par un fournisseur d'accès à internet), et internet 30. En d'autres termes, la translation d'adresse réseau privée à adresse réseau publique passe par une adresse réseau privée « intermédiaire » entre le réseau privé et le réseau opérateur. On comprendra en outre que contrairement aux réseaux privés 10 qui sont cloisonnés d'internet 30 par les routeurs 2, le réseau opérateur 20 accepte les adresses routables sur internet 30.

On note toutefois que la mise en oeuvre d'un niveau de NAT44 au niveau de chaque routeur 2, bien que destiné à assurer une connexion de secours, implique en théorie la consommation d'autant d'adresses IPv4 publiques que dans l'art antérieur (une liste d'adresses pour chaque routeur). C'est pourquoi la première translation d'adresse réseau (mise en oeuvre par la méthode selon l'invention dans le cas où il y a incompatibilité du service avec le CGN) consiste en une translation de l'adresse réseau privée de l'équipement 1 en une adresse réseau publique choisie parmi une liste d'adresses réseau publiques supplémentaires avantageusement partagée entre les routeurs 2 de ladite pluralité d'équipements.

En effet, comme expliqué précédemment la grande majorité des services internet restent compatibles avec le CGN, et ne nécessitent pas de « bypass ». A part pour quelques consommateurs spécifiques de certains services internet, la plupart des usagers consomment essentiellement des services web en http. Le recours au premier niveau de NAT44 reste rare, c'est pourquoi il n'est plus nécessaire que chaque routeur 2 dispose de ses adresses réseau publiques : un pool partagé d'adresses réseau publiques supplémentaires suffit.

### Détection des services incompatibles

La méthode selon l'invention met en oeuvre une étape de détermination si le service internet auquel un équipement souhaite accéder est compatible avec une deuxième translation d'adresse réseau pouvant être mise en oeuvre par une passerelle 3 reliée à l'internet 30.

Avantageusement cela est fait en identifiant le service internet, puis en cherchant si ce service est listé comme incompatible avec un CGN. Pour cela le routeur 2 de chaque équipement 1 peut disposer d'une liste de services internet non compatibles avec ladite deuxième translation d'adresse réseau, l'étape de détermination si ledit service est compatible avec ladite deuxième translation d'adresse réseau consistant en la vérification que le service auquel l'équipement souhaite accéder n'est pas présent dans ladite liste de services internet non compatibles.

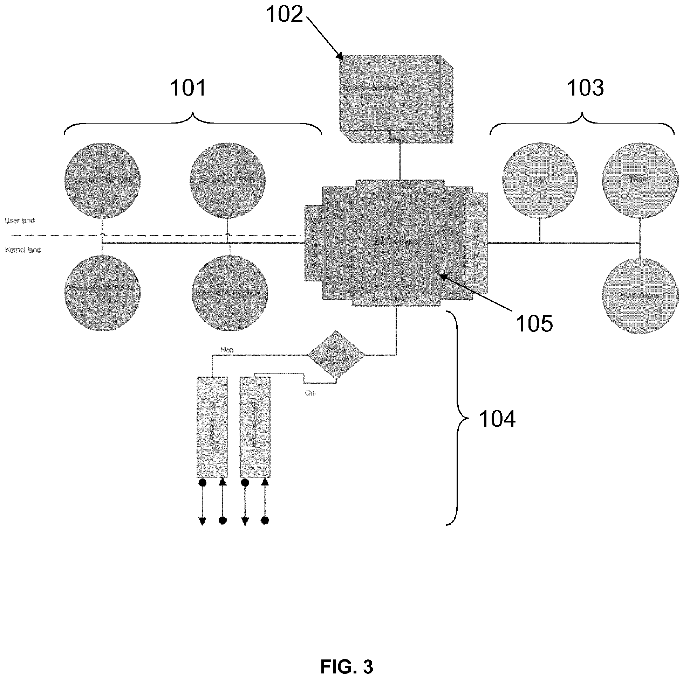

Pour l'identification elle-même, avantageusement le routeur 2 de chaque équipement 1 dispose d'au moins une sonde logicielle apte à identifier au moins un type de service internet, en d'autres termes d'un module d'observation du trafic réseau. Par exemple, l'architecture représentée sur la figure 3 comprend quatre sondes logicielles (basées sur les mécanismes offerts par UPNP IGD, NAT PMP, STUN/TURN/ICE, NETFILTER, IHM). On note en outre que les pare-feux dont disposent généralement les routeurs Linux se reposent sur Netfilter sur lequel la méthode selon l'invention peut se baser.

Une sonde logicielle est typiquement conçue pour détecter une ou plusieurs famille(s) de services qui se comportent pareillement vis-à-vis de la seconde translation d'adresse réseau, grâce notamment à une analyse au niveau protocolaire : observation des ports impliqués (destination, annonce d'ouverture), annonce du service, type, voire détection de paquets.

De façon particulièrement préférée, les routeurs 2 disposent de capacités d'auto-apprentissage. En effet, la liste de services incompatibles déjà identifiés est très probablement loin d'être exhaustive. Or les services internet qui ne sont pas mentionnés dans la liste de services internet non compatibles sont supposés compatibles par le routeur 2 : un service inconnu non compatible verra le passage par défaut par un CGN, et le service ne fonctionnera pas. C'est pourquoi la méthode comprend en outre avantageusement une étape supplémentaire de déclenchement d'une alerte et/ou d'enregistrement de données dans un historique d'événements (en d'autres termes la tenue d'un « log » en terminologie anglo-saxonne) par le routeur 2 d'un équipement 1 lorsque ledit équipement ne parvient pas à accéder à un service pourtant déterminé comme compatible avec la deuxième translation d'adresse réseau.

Cette alerte et/ou ce log peuvent être simplement exploités par le routeur 2 en s'accompagnant de l'ajout dans ladite liste de services internet non compatibles avec ladite deuxième translation d'adresse réseau du service internet ayant déclenché l'alerte et/ou le log, mais de façon préférée sont renvoyés sur le réseau opérateur 20, de façon à partager l'information.

En effet comme expliqué précédemment, les routeurs 2 sont notamment des dispositifs de connexion internet (IAD) proposés par un fournisseur d'accès internet, lequel est l'opérateur du réseau 20. Le principe du partage d'information est que l'étape de déclenchement d'une alerte s'accompagne de la notification du service internet ayant déclenché l'alerte à un serveur 4 du fournisseur d'accès internet, puis avantageusement de la mise à jour régulière de la liste de services internet non compatibles avec ladite deuxième translation d'adresse réseau par ledit serveur du fournisseur accès, la liste mise à jour de services internet non compatibles comprenant le ou les services internet notifiés au serveur 4 du fournisseur d'accès. Ce serveur 4 est avantageusement un ACS, c'est-à-dire Auto Configuration Server, en d'autres termes un serveur apte à assurer des services de contrôle, d'administration et de diagnostic sur le réseau opérateur 20, par exemple via le protocole « CWMP », ou TR069.

Ainsi, dès que l'un des clients du fournisseur d'accès détecte un nouveau système incompatible qui nécessite un bypass du CGN, cette information se propage suivant une politique défini par l'opérateur chez tous les autres clients. Les désagréments sont donc évités au maximum, et de façon complètement transparente et anonyme. Il est en outre possible de revenir à une liste précédemment sauvegardée (« backup ») si un service a été signalé par erreur, et ce d'autant plus facilement que l'on détient les logs.

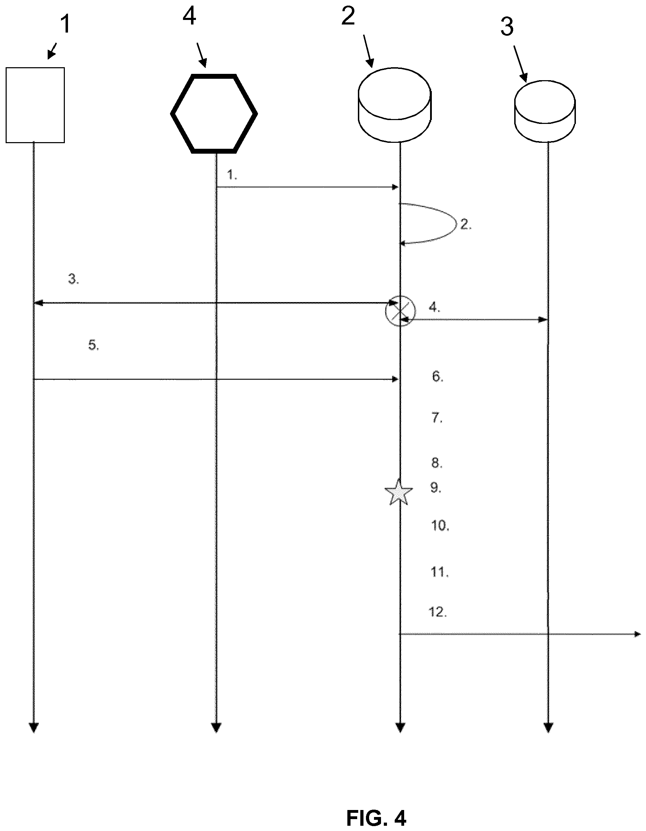

Un exemple d'utilisation d'une sonde UPNP est représenté sur la figure 4 :
- 1.: Le serveur 4 envoie au routeur 2 des instructions de configuration.
- 2.: Le routeur active ses sondes et surveille les services internet.
- 3.: En cas d'échanges de requêtes pour des services compatibles...
- 4.: ...le routeur 2 est en communication avec le CGN 3 pour NAT444.
- 5.: Ici, une requête UPNP IGD (par exemple provenant d'un client P2P sur un équipement 1 dans le réseau local) est envoyée au routeur 2.
- 6.: La sonde Daemon UPNP détecte un paquet UPNP IGD
- 7.: Vérification dans la liste de services si le service doit être considéré comme compatible.
- 8.: Vérification des propriétés du CGN 3.
- 9.: Détection d'un service non compatible (le CGN 3 ne supportant pas le protocole PCP).
- 10.: Mise à jour de la liste de services incompatibles (s'il n'y était pas)
- 11.: Envoi alerte et logs le cas échéant
- 12.: Demande d'une adresse IP publique pour bypass CGN.

### Gestion de la liste d'adresses réseau publiques supplémentaires

Comme expliqué précédemment, un pool partagé d'adresses réseau publiques supplémentaires est mis à disposition des routeurs 2, de façon à pouvoir réaliser une translation d'adresse en NAT44 au niveau des routeurs 2 en cas de bypass du CGN.

Il est très intéressant de pouvoir se contenter de la liste d'adresses réseau publique la plus petite possible. C'est pourquoi une adresse réseau publique choisie parmi une liste d'adresses réseau publiques supplémentaires partagée entre les routeurs 2 de ladite pluralité d'équipements 1 est avantageusement fournie pour une durée limitée, ou « bail ». On peut envisager plusieurs scénarios. Dans le cas d'un « timer dur », dès que la durée limitée est expirée, la connexion au service est interrompue. Dans le cas d'un « timer souple », dès que la durée limitée est expirée on redemande la mise à disposition d'une nouvelle adresse réseau publique.

Il est en outre souhaitable de disposer d'algorithmes permettant de calculer cette durée, laquelle est avantageusement variable selon les circonstances : ladite durée limitée est de façon préférée fonction du nombre total d'adresses de la liste d'adresses réseau publiques supplémentaires partagée, et du nombre d'adresses disponibles de la liste. Par exemple, on peut imaginer une limite maximum d'utilisation d'une adresse publique, mise en oeuvre lorsqu'au moins un certain nombre ou un certain pourcentage d'adresses de la liste sont libres, cette durée diminuant proportionnellement au taux d'utilisation des adresses.

Ainsi si l'on suppose une liste de 100 adresses, une durée maximale de 8h et un taux d'occupation seuil de 50%, la durée maximale d'occupation tombe à 4h à 75% d'occupation, 1 h36 à 90% d'occupation, et 48min à 95% d'occupation. Cette durée variable permet un rationnement des adresses publiques en cas de pénurie.

Il est en outre possible que la durée limitée de fourniture d'une adresse réseau publique tienne également compte de l'heure et du jour. Par exemple en plein nuit, où le trafic est plus faible, la durée maximale d'utilisation peut être augmentée.

Dans tous les cas il est souhaitable de recourir à une superposition d'utilisation d'adresses (une adresse réseau publique supplémentaire pour le service incriminé, une adresse réseau publique normale pour le reste). Ainsi, l'attribution de l'adresse s'interrompt dès que l'utilisateur arrête de se connecter au service incriminé. L'adresse est ainsi libérée même si l'on continue d'utiliser d'autres services. A noter que pour des raisons de sécurité, on peut envisager de ne redonner cette adresse IP libérée qu'au bout d'un certain délai afin d'éviter d'avoir des flux entrant non désirés vers le prochain routeur détenteur de cette adresse (une sorte de mise en quarantaine). A noter également que ce routeur pourra implémenter un NAT 44 de type « symmetric » ou « port restricted cone NAT » afin de filtrer les flux entrant uniquement aux équipements qui ont été contactés par un équipement du réseau local.

Par ailleurs on peut avantageusement prévoir que certains routeurs des routeurs 2 de la pluralité d'équipements 1 entre lesquels la liste d'adresses réseau publiques supplémentaires est partagée (en particulier des gros consommateurs d'un service non compatible) disposent d'au moins une adresse réservée parmi les adresses de la liste. Cela permet que même en cas de fort taux d'occupation des adresses publiques de la liste ces routeurs 2 puissent continuer à fonctionner. Cela permet également de différencier les niveaux de services par des Service Level Agreement entre un client et l'opérateur. Un client ayant acheté un SLA haut de gamme pouvant obtenir une adresse IP dédiée.

La liste est avantageusement gérée par un serveur 5 du fournisseur d'accès, éventuellement le même serveur 4 qui gère les mises à jour des listes de services incompatibles comme représenté sur la figure 1. L'étape de première translation de l'adresse réseau privée de l'équipement en une adresse réseau publique choisie parmi une liste d'adresses réseau publiques supplémentaires partagée entre les routeurs 2 de ladite pluralité d'équipements 1 comprend alors préférentiellement l'ouverture d'une nouvelle connexion internet (si possible une interface alternative permettant fournir un nouvel accès par défaut à internet ex. PPPoA, PPPoE, L2VPN, etc.) entre le routeur 2 de l'équipement 1 et un serveur 6 indiqué par le serveur 5 gérant la liste d'adresses réseau publiques supplémentaires (par exemple un serveur DHCP pour gérer l'IP en L2VPN et une gateway pour échanger des données avec le routeur 2 et ainsi fournir la connectivité). La nouvelle connexion internet peut en outre être obtenue via une nouvelle interface de type VLAN ou PPPoX. Le système maintient également une table de routage permettant de sélectionner l'interface par défaut ou cette nouvelle interface suivant les requêtes sortantes. Le serveur 6 peut éventuellement être aussi le même équipement que le serveur 5, comme représenté sur la figure 1.

Prenons l'exemple du PPP (Point-to-Point Protocol). Ce dernier est un protocole de transmission internet (PPPoE lorsqu'il est encapsulé dans Ethernet) qui permet d'établir une connexion de type liaison point à point (c'est-à-dire exclusive) entre deux hôtes, ici le routeur 2 et le serveur 6 (un serveur PPP qui assure la connectivité directement avec le routeur 2). Ce dernier est lui-même connecté au serveur 5 (qui gère le plan d'adressage) qui est avantageusement un LNS (L2TP Network Server), c'est-à-dire serveur Layer 2 Tunneling Protocol (L2TP), en d'autre termes un serveur qui termine un tunnel (le routeur 2 étant l'équipement qui initie le tunnel). Ce protocole L2TP pouvant transporter du PPP permet d'offrir plus de flexibilité à l'opérateur afin de transporter des paquets IP des différentes collectes vers son réseau coeur. L'opérateur (SI) peut définir une politique de gestion d'adresses via un équipement qui peut être un serveur RADIUS (qui négocie avec le LNS).
Dans l'exemple du L2VPN, le plan d'adressage est géré par un serveur 5 DHCP, et le serveur 6 qui assure la connectivité avec le routeur 2 est un routeur de bordure appelé « PE » pour Provider Egde.

### Exemple d'ouverture du lien PPP

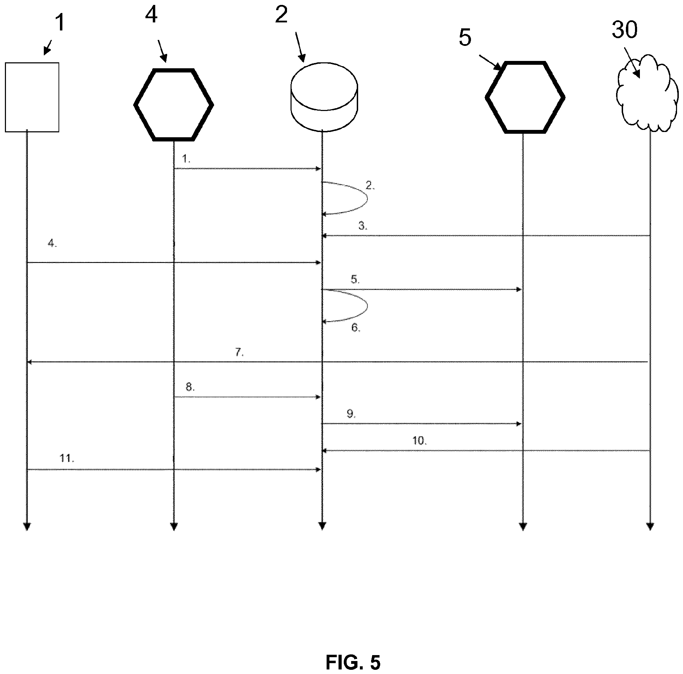

En référence à la figure 5, on a représenté le « Call Flow » entre les différents acteurs (équipement 1, serveur du fournisseur d'accès 4, routeur 2, serveur PPP 6 connecté au serveur LNS 5 et internet 30. La deuxième colonne représente des actions du fournisseur d'accès lui-même).
- 1.: Le fournisseur d'accès envoie aux routeurs 2 la liste des services concernés par le bypass de CGN, dont des données telles que la configuration du service, les profils appliqués, la topologie réseau, la capacité du CGN.
- 2.: Le routeur active ses sondes et surveille les services internet. Une détection de NAT peut être mise en oeuvre : une requête IP est faite vers serveur connu, on compare l'IP reçue avec IP attendue. Si différence, le routeur 2 sait alors qu'une seconde translation d'adresse réseau est mis en oeuvre et qu'on est susceptible de se trouver dans des conditions d'incompatibilité. Une détection ALG peut également être mise en oeuvre de façon similaire, cette fois en envoyant une requête SIP. Si une différence apparait entre les niveaux 3 et 5 du message de réponse, on est également susceptible de se trouver dans des conditions d'incompatibilité.
- 3.: En l'absence de règles spécifiques, le pare-feu du routeur 2 bloque les connexions entrantes.
- 4.: Supposons l'envoi d'une requête d'un équipement pour un service listé comme non compatible dans la base de données.
- 5.: Le routeur 2 demande l'ouverture d'un lien PPP avec le serveur PPP 6.
- 6.: Le routeur récupère une IPv4 publique et effectue des actions internes (gestion des règles de routages, adaptation des règles de redirection de flux, gestion des règles NAT, gestion des règles de firewall).
- 7.: Trafic entrant autorisé sous conditions (étape 6) via le lien PPP.
- 8.: Supposons que le nombre d'adresse libres diminue et que la durée limitée d'attribution de l'adresse publique touche à sa fin : demande de fin de connexion par le fournisseur d'accès ou le routeur 2.
- 9.: Fermeture tunnel PPP
- 10.: Trafic entrant à nouveau bloqué pour ce service.
- 11.: Trafic sortant bloqué pour ce service jusqu'à ce que le routeur 2 puisse obtenir une nouvelle adresse publique. Eventuellement réessais par exemple dans le cas d'une politique de « timer souple ».

### Transition vers IPv6

Toutes les adresses réseau mentionnées précédemment peuvent être des adresses IPv4. En cela, la méthode selon l'invention s'inscrit dans la phase pré-IPv6. Mais ce mécanisme est également compatible dans le cadre de la transition vers IPv6 et la cohabitation avec IPv4.

En effet, un AFTR (Adress Family Transition Router) contenant la fonctionnalité de CGN peut jouer le rôle de passerelle 3 pour le standard « Dual-Stack Lite ». Cette solution, dite de Tunnel 4-to-6 consiste à utiliser un tunnel pour transporter les flux IPv4 privés jusqu'au CGN 3 sans activation de la fonctionnalité de NAT pour ces flux au niveau du routeur. Il n'y a alors plus de NAT444 à proprement parler mais bien du NAT 44. Toutefois le routeur 2 continue à se comporter comme un routeur lors de la gestion des requêtes/réponses internes et externes (gestion UPNP IGD, Firewall...). Il s'agit de l'une des exceptions mentionnées plus haut dans la présente description dans lesquelles il n'y a pas de première translation d'adresse réseau. Mais comme expliqué, la translation d'adresse IP est réalisé par un équipement partagé entre les routeurs 2 dans le réseau de l'opérateur. On continuera d'appeler cette action seconde translation.

C'est pourquoi l'invention concerne également une méthode d'attribution d'une adresse réseau publique à une pluralité d'équipements 1, chacun des équipements 1 disposant d'une adresse réseau privée et étant reliés à l'internet 30 via un routeur 2 apte à procéder à une première translation d'adresse réseau, la méthode étant caractérisée en ce qu'elle comprend la mise en oeuvre des étapes suivantes lorsqu'un équipement 1 souhaite accéder à un service internet :
- détermination si ledit service internet est compatible avec une deuxième translation d'adresse réseau pouvant être mise en oeuvre par une passerelle 3 reliée à l'internet 30 ;
- s'il y a compatibilité du service internet avec la deuxième translation d'adresse réseau :
   ∘ tunnelisation du flux de données échangées pour accéder audit service internet entre le routeur 2 de l'équipement 1 et la passerelle 3 ;
   ∘ deuxième translation de l'adresse réseau privée de l'équipement 1 en une adresse réseau publique choisie parmi une liste d'adresses réseau publiques dont dispose la passerelle 3 ;
- s'il n'y a pas compatibilité du service internet avec la deuxième translation d'adresse réseau :
   ∘ première translation de l'adresse réseau privée de l'équipement 1 en une adresse réseau publique choisie parmi une liste d'adresses réseau publiques supplémentaires partagée entre les routeurs 2 de ladite pluralité d'équipements 1.

La seule différence avec la première méthode est qu'en cas de service compatible il n'y a comme expliqué plus de première translation d'adresse réseau au niveau du routeur 2 avant transmission du flux à la passerelle CGN 3 : la seule translation d'adresse se fait au niveau du CGN 3, on est ainsi en présence d'un NAT44 simple.

En effet, on remplace cette première translation par une étape de tunnelisation des flux IPv4 dans un flux IPv6, en particulier grâce au standard Dual-Stack Lite (DSLite). En d'autres termes on effectue avantageusement l'encapsulation puis la désencapsulation des paquets IPv4 transitant entre le routeur 2 et la passerelle 3 dans des paquets IPv6 dans le réseau opérateur 20.

A terme, une fois la transition vers IPv6 achevée, en théorie il n'est plus nécessaire de pouvoir procéder au basculement sur la liste d'adresses réseau publiques de secours, tous les services étant devenus compatibles, sauf si éventuellement un NAT66 étant mis en oeuvre en amont du routeur 2.

### Réseau alternatif

La présente invention n'est pas liée seulement à un type de réseau d'accès (ADSL, Fibre (FTTH), Câble (FTTLA), 2G, 3G ...). En effet le routeur 2 est éventuellement apte à établir une connexion à l'internet 30 via plus d'un réseau (au moins un réseau principal 20 et un réseau alternatif 21). La méthode selon l'invention prend avantageusement en compte tous ces réseaux d'accès en cas de problème pour mettre en oeuvre la première translation d'adresse réseau. Le réseau alternatif 21 permet ainsi une connectivité dite de « « back-up »

Plusieurs exemples de cas de figure :
1) Routeur 2 avec une connectivité principale en ADSL et une connectivité de backup en mobile (réseau 3G par exemple)
2) Routeur 2 avec une connectivité principale en FTTH et une connectivité de backup en mobile
3) Routeur 2 avec une connectivité principale en FTTLA et une connectivité de backup en mobile
4) Routeur 2 avec une connectivité principale en FTTH et une connectivité de backup en ADSL
5) Routeur avec une connectivité principale en FTTLA et une connectivité de backup en ADSL

Dans ce cas, l'étape de première translation de l'adresse réseau privée de l'équipement 1 en une adresse réseau publique choisie parmi une liste d'adresses réseau publiques supplémentaires partagée entre les routeurs 2 de ladite pluralité d'équipements 1 est retentée via le réseau alternatif 20 en cas d'échec via le réseau principal 20.

Cela peut être utile dans le cas où le serveur 4 d'attribution d'adresses IP publiques remonte une impossibilité de fournir une adresse au routeur 2 pour l'équipement 1, ou dans le cas de toute autre erreur indépendante de la méthode selon l'invention remontée lors de l'établissement de la connexion internet.

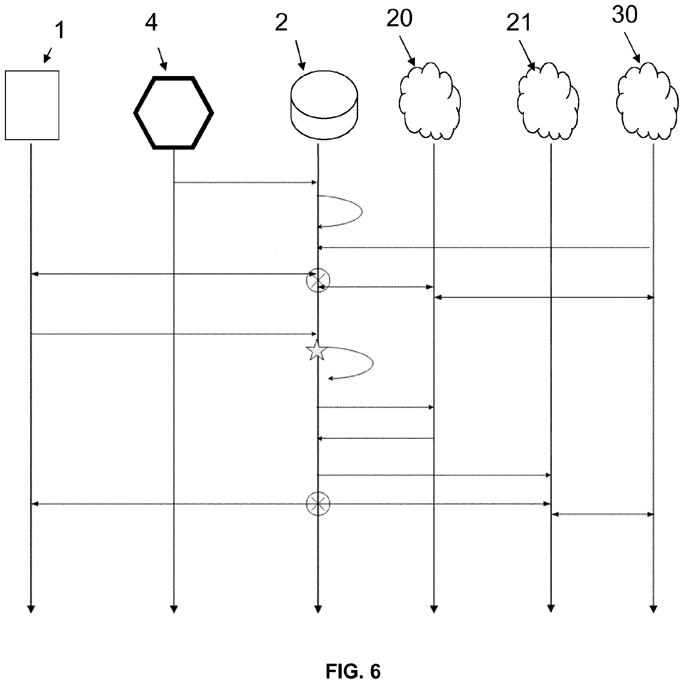

Comme représenté sur la figure 6 (par comparaison avec la figure 5), les étapes spécifiquement réalisées sont alors :
- le routeur 2 détecte un service incompatible ;
- le routeur 2 tente d'établir une connexion internet avec une demande d'obtention d'adresse IP publique via le réseau principal 20 ;
- le routeur 2 obtient un message d'erreur ;
- le routeur tente d'établir une deuxième connexion internet avec une demande d'obtention d'adresse IP publique via le réseau alternatif 21.

### Dispositif et système

Selon un troisième et un quatrième aspect, l'invention concerne d'une part un dispositif d'accès internet (IAD) destiné à relier en tant que routeur au moins un équipement 1 à l'internet 30, caractérisé en ce qu'il est apte à mettre en oeuvre l'une des méthodes d'attribution d'une adresse réseau publique décrites précédemment lorsque l'au moins un équipement 1 souhaite accéder à un service internet, et d'autre part un système comprenant au moins un dispositif d'accès internet 2 selon la revendication 18, une pluralité d'équipements 1 reliés à l'internet via l'au moins un dispositif d'accès internet 2, une passerelle 3 (en particulier CGN) également relié à l'internet 30, et un serveur 5 de gestion de la liste d'adresses réseau publiques supplémentaires (notamment un serveur LNS). Le système peut en outre comprendre un serveur 4 du fournisseur d'accès à internet (serveur ACS) pour la gestion centralisée des listes de services non compatibles.

L'IAD selon le troisième aspect de l'invention est l'un des routeurs 2, auquel est avantageusement intégré l'architecture logicielle telle que représentée à la figure 3 (l'homme du métier comprendra que cette architecture est uniquement donnée à titre indicatif). Les modules représentés de l'architecture logicielle se partagent en cinq interfaces de programmation API (« Application Programming Interface »), mise en oeuvre grâce à un processeur :
- une API Sonde 101 qui gère la ou les sondes logicielles aptes à identifier les services internet décrites précédemment ;
- une API BDD (Base De Données) 102 qui comprend les listes de services identifiés et les actions à entreprendre ;
- une API Contrôle 103 qui comprend un module IHM pour le contrôle par l'utilisateur, un module TR069 (pour la communication avec un serveur ACS 4) et un module d'envoi de notifications et logs ;
- une API Routage 104, qui gère le basculement objet de l'invention d'une interface 1 (pas de route spécifique, deuxième translation d'adresse via le CGN 3) à une interface 2 (route spécifique, première translation d'adresse vers une adresse publique du pool au niveau du routeur lui-même) ;
- Une API pilotage 105, qui intègre l'intelligence du système et permet de contrôler les quatre API listées ci-dessus.

## Revendications

1. Méthode d'attribution d'une adresse réseau publique à une pluralité d'équipements (1), chacun des équipements (1) disposant d'une adresse réseau privée et étant reliés à l'internet (30) via un routeur (2) apte à procéder à une première translation d'adresse réseau, la méthode étant **caractérisée en ce qu'**elle comprend la mise en oeuvre des étapes suivantes lorsqu'un équipement (1) souhaite accéder à un service internet :
- détermination si ledit service internet est compatible avec une deuxième translation d'adresse réseau pouvant être mise en oeuvre par une passerelle (3) reliée à l'internet (30) ;
- s'il y a compatibilité du service internet avec la deuxième translation d'adresse réseau :
∘ première translation de l'adresse réseau privée associée à l'équipement (1) en une nouvelle adresse réseau privée choisie parmi une liste d'adresses réseau privées dont dispose le routeur (2) de l'équipement (1) ;
∘ mise en communication du routeur (2) et de la passerelle (3) ;
∘ deuxième translation de ladite nouvelle adresse réseau privée de l'équipement (1) en une adresse réseau publique choisie parmi une liste d'adresses réseau publiques dont dispose la passerelle (3) ;
- s'il n'y a pas compatibilité du service internet avec la deuxième translation d'adresse réseau :
∘ première translation de l'adresse réseau privée de l'équipement (1) en une adresse réseau publique choisie parmi une liste d'adresses réseau publiques supplémentaires partagée entre les routeurs (2) de ladite pluralité d'équipements (1).

2. Méthode selon la revendication précédente, dans laquelle l'adresse réseau privée associée à l'équipement (1), ladite nouvelle adresse réseau privée et les adresses de la liste d'adresses réseau publiques supplémentaires sont des adresses IPv4 ou des adresses IPv6.

3. Méthode d'attribution d'une adresse réseau publique à une pluralité d'équipements (1), chacun des équipements (1) disposant d'une adresse réseau privée et étant reliés à l'internet (30) via un routeur (2) apte à procéder à une première translation d'adresse réseau, la méthode étant **caractérisée en ce qu'**elle comprend la mise en oeuvre des étapes suivantes lorsqu'un équipement (1) souhaite accéder à un service internet :
- détermination si ledit service internet est compatible avec une deuxième translation d'adresse réseau pouvant être mise en oeuvre par une passerelle (3) reliée à l'internet (30) ;
- s'il y a compatibilité du service internet avec la deuxième translation d'adresse réseau :
∘ tunnelisation du flux de données échangées pour accéder audit service internet entre le routeur (2) de l'équipement (1) et la passerelle (3) ;
∘ deuxième translation de l'adresse réseau privée de l'équipement (1) en une adresse réseau publique choisie parmi une liste d'adresses réseau publiques dont dispose la passerelle (3) ;
- s'il n'y a pas compatibilité du service internet avec la deuxième translation d'adresse réseau :
∘ première translation de l'adresse réseau privée de l'équipement (1) en une adresse réseau publique choisie parmi une liste d'adresses réseau publiques supplémentaires partagée entre les routeurs (2) de ladite pluralité d'équipements (1).

4. Méthode selon la revendication précédente, dans laquelle l'adresse réseau privée associée à l'équipement (1) et les adresses de la liste d'adresses réseau publiques supplémentaires sont des adresses IPv4 ou des adresses IPv6.

5. Méthode selon la revendication 4, dans laquelle ladite étape de tunnelisation comprend l'encapsulation des paquets IPv4 transitant entre le routeur (2) et la passerelle (3) dans des paquets IPv6.

6. Méthode selon l'une des revendications précédentes, dans laquelle le routeur (2) de chaque équipement (1) dispose d'une liste de services internet non compatibles avec ladite deuxième translation d'adresse réseau, l'étape de détermination si ledit service est compatible avec ladite deuxième translation d'adresse réseau consistant en la vérification que le service auquel l'équipement (1) souhaite accéder n'est pas présent dans ladite liste de services internet non compatibles.

7. Méthode selon la revendication 6, dans laquelle le routeur de chaque équipement (1) dispose d'au moins une sonde logicielle apte à identifier au moins un type de service internet.

8. Méthode selon l'une des revendications 6 ou 7, comprenant en outre une étape supplémentaire de déclenchement d'une alerte et/ou d'enregistrement de données dans un historique d'événements par le routeur (2) d'un équipement (1) lorsque ledit équipement (1) ne parvient pas à accéder à un service pourtant déterminé comme compatible avec la deuxième translation d'adresse réseau.

9. Méthode selon la revendication 8, dans laquelle l'étape de déclenchement d'une alerte et/ou d'enregistrement de données dans un historique d'événements s'accompagne de l'ajout dans ladite liste de services internet non compatibles avec ladite deuxième translation d'adresse réseau du service internet ayant déclenché l'alerte.

10. Méthode selon la revendication 8, dans laquelle le routeur (2) de chaque équipement (1) est un dispositif d'accès internet proposé par un fournisseur d'accès internet, l'étape de déclenchement d'une alerte et/ou d'enregistrement de données dans un historique d'événements s'accompagnant de la notification du service internet ayant déclenché l'alerte à un serveur (4) du fournisseur d'accès internet.

11. Méthode selon la revendication 10, dans laquelle la liste de services internet non compatibles avec ladite deuxième translation d'adresse réseau est régulièrement mise à jour par ledit serveur (4) du fournisseur accès, la liste mise à jour de services internet non compatibles comprenant le ou les services internet notifiés au serveur (4) du fournisseur d'accès.

12. Méthode selon l'une des revendications précédentes, dans laquelle l'étape de première translation de l'adresse réseau privée de l'équipement (1) en une adresse réseau publique choisie parmi une liste d'adresses réseau publiques supplémentaires partagée entre les routeurs (2) de ladite pluralité d'équipements (1) comprend l'ouverture d'une nouvelle connexion internet entre le routeur (2) de l'équipement (1) et un serveur (6) indiqué par un serveur (5) gérant la liste d'adresses réseau publiques supplémentaires.

13. Méthode selon l'une des revendications précédentes, dans laquelle le routeur (10) est apte à établir une connexion à l'internet (30) via un réseau principal (20) ou via un réseau alternatif (21), l'étape de première translation de l'adresse réseau privée de l'équipement (1) en une adresse réseau publique choisie parmi une liste d'adresses réseau publiques supplémentaires partagée entre les routeurs (2) de ladite pluralité d'équipements (1) étant retentée via le réseau alternatif (20) en cas d'échec via le réseau principal (20).

14. Système comprenant au moins un dispositif d'accès internet (2), une pluralité d'équipements (1) reliés à l'internet (30) via l'au moins un dispositif d'accès internet (2), une passerelle (3) également relié à l'internet (30), et un serveur (5) de gestion de la liste d'adresses réseau publiques supplémentaires, le dispositif d'accès internet (2) et la passerelle étant configurés pour mettre en oeuvre la méthode selon l'une des revendications précédentes lorsqu'un équipement (1) souhaite accéder à un service internet.

## Patentansprüche

1. Zuteilungsmethode einer öffentlichen Netzadresse an eine Mehrzahl von Geräten (1), wobei jedes der Geräte (1) über eine private Netzadresse verfügt und über einen Router (2), der in der Lage ist, eine erste Netzadressenübersetzung durchzuführen, mit dem Internet (30) verbunden ist, wobei die Zuteilungsmethode **dadurch gekennzeichnet ist, dass** sie das Ausführen der folgenden Schritte umfasst, wenn ein Gerät (1) auf einen Internetdienst zugreifen möchte:
- Bestimmung, ob der Internetdienst mit einer zweiten Netzadressenübersetzung kompatibel ist, die durch ein mit dem Internet (30) verbundenes Gateway (3) ausführbar ist;
- wenn Kompatibilität zwischen dem Internetdienst und der zweiten Netzadressenübersetzung besteht:
∘ erste Übersetzung der privaten Netzadresse, die dem Gerät (1) zugeordnet ist in eine neue private Netzadresse, die aus einer dem Router (2) des Geräts (1) verfügbaren Liste mit privaten Netzadressen ausgewählt ist;
∘ Verbinden des Routers (2) und des Gateways (3);
∘ zweite Übersetzung der neuen privaten Netzadresse des Geräts (1) in eine öffentliche Netzadresse, die aus einer dem Gateway (3) verfügbaren Liste mit öffentlichen Netzadressen ausgewählt ist;
- wenn keine Kompatibilität zwischen dem Internetdienst und der zweiten Netzadressenübersetzung besteht:
∘ erste Übersetzung der privaten Netzadresse des Geräts (1) in eine öffentliche Netzadresse, die aus einer den Routern (2) der Mehrzahl der Geräte (1) gemeinsamen Liste mit zusätzlichen öffentlichen Netzadressen ausgewählt ist.

2. Methode nach dem vorhergehenden Anspruch, wobei die dem Gerät (1) zugeordnete private Netzadresse, die neue private Netzadresse und die Adressen aus der Liste der zusätzlichen öffentlichen Netzadressen IPv4-Adressen oder IPv6-Adressen sind.

3. Zuteilungsmethode einer öffentlichen Netzadresse an eine Mehrzahl von Geräten (1), wobei jedes der Geräte (1) über eine private Netzadresse verfügt und über einen Router (2), der in der Lage ist, eine erste Netzadressenübersetzung durchzuführen, mit dem Internet (30) verbunden ist, wobei die Zuteilungsmethode **dadurch gekennzeichnet ist, dass** sie das Ausführen der folgenden Schritte umfasst, wenn ein Gerät (1) auf einen Internetdienst zugreifen möchte:
- Bestimmung, ob der Internetdienst mit einer zweiten Netzadressenübersetzung kompatibel ist, die durch ein mit dem Internet (30) verbundenes Gateway (3) ausführbar ist;
- wenn Kompatibilität zwischen dem Internetdienst und der zweiten Netzadressenübersetzung besteht:
∘ Tunnelung des ausgetauschten Datenstroms, um auf den Internetdienst zwischen dem Router (2) des Geräts (1) und des Gateways (3) zuzugreifen;
∘ zweite Übersetzung der privaten Netzadresse des Geräts (1) in eine öffentliche Netzadresse, die aus der dem Gateway (3) verfügbaren Liste mit öffentlichen Netzadressen ausgewählt ist;
- wenn keine Kompatibilität zwischen dem Internetdienst und der zweiten Netzadressenübersetzung besteht:
∘ erste Übersetzung der privaten Netzadresse des Geräts (1) in eine öffentliche Netzadresse, die aus einer den Routern (2) der Mehrzahl der Geräte (1) gemeinsamen Liste mit zusätzlichen öffentlichen Netzadressen ausgewählt ist.

4. Methode nach dem vorhergehenden Anspruch, wobei die dem Gerät (1) zugeordnete private Netzadresse und die Adressen der Liste mit zusätzlichen öffentlichen Netzadressen IPv4-Adressen oder IPv6-Adressen sind.

5. Methode nach Anspruch 4, wobei der Schritt der Tunnelung die Einkapselung von zwischen dem Router (2) und dem Gateway (3) laufenden IPv4-Paketen in IPv6-Pakete umfasst.

6. Methode nach einem der vorhergehenden Ansprüche, wobei der Router (2) jedes Geräts (1) über eine Liste mit Internetdiensten verfügt, die nicht mit der zweiten Netzadressenübersetzung kompatibel sind, wobei der Schritt der Bestimmung, ob der Dienst mit der zweiten Netzadressenübersetzung kompatibel ist in der Überprüfung besteht, ob der Dienst, auf den das Gerät (1) zugreifen möchte nicht in der Liste der nichtkompatiblen Internetdienste anwesend ist.

7. Methode nach Anspruch 6, wobei der Router jedes Geräts (1) über mindestens eine Software-Sonde verfügt, die in der Lage ist, mindestens einen Internetdiensttyp zu identifizieren.

8. Methode nach einem der Ansprüche 6 oder 7, zudem einen zusätzlichen Schritt der Alarmauslösung und/oder Datenaufzeichnung in einer Ereignishistorie durch den Router (2) eines Geräts (1) umfassend, wenn es dem Gerät (1) nicht gelingt, auf einen Dienst zuzugreifen, obwohl dieser mit der zweiten Netzadressenübersetzung als kompatibel bestimmt wurde.

9. Methode nach Anspruch 8, wobei der Schritt zur Alarmauslösung und/oder Datenaufzeichnung in einer Ereignishistorie von der Aufnahme in die Liste der Internetdienste, die mit der zweiten Netzadressenübersetzung des den Alarm ausgelösten Internetdienstes nicht kompatibel sind, begleitet wird.

10. Methode nach Anspruch 8, wobei der Router (2) jedes Geräts (1) eine Vorrichtung zum von einem Internet Service Provider bereitgestellten Internetzugang ist, wobei der Schritt der Alarmauslösung und/oder der Datenaufzeichnung in einer Ereignishistorie von der Meldung des den Alarm ausgelösten Internetdienstes an einen Server (4) des Internet Service Providers begleitet wird.

11. Methode nach Anspruch 10, wobei die Liste der mit der zweiten Netzadressenübersetzung nicht kompatiblen Internetdienste durch den Server (4) des Internet Service Providers regelmäßig aktualisiert wird, wobei die aktualisierte Liste der nicht kompatiblen Internetdienste den Internetdienst bzw. die Internetdienste, die an den Server (4) des Internet Service Providers gemeldet wurde bzw. wurden, umfasst.

12. Methode nach einem der vorhergehenden Ansprüche, wobei der Schritt der ersten Übersetzung der privaten Netzadresse des Geräts (1) in eine öffentliche Netzadresse, die aus einer den Routern (2) der Mehrzahl der Geräte (1) gemeinsamen Liste mit zusätzlichen öffentlichen Netzadressen ausgewählt ist, die Öffnung einer neuen Internetverbindung zwischen dem Router (2) des Geräts (1) und einem Server (6), der durch einen die Liste der zusätzlichen öffentlichen Netzadressen verwaltenden Server (5) angezeigt wird, umfasst.

13. Methode nach einem der vorhergehenden Ansprüche, wobei der Router (10) in der Lage ist, eine Internetverbindung (30) über ein Hauptnetz (20) oder über ein Alternativnetz (21) herzustellen, wobei der Schritt der ersten Übersetzung der privaten Netzadresse des Geräts (1) in eine öffentliche Netzadresse, die aus einer den Routern (2) der Mehrzahl der Geräte (1) gemeinsamen Liste mit zusätzlichen öffentlichen Netzadressen ausgewählt ist, im Fall eines Ausfalls des Hauptnetzes (20) über das Alternativnetz (20) erneut versucht wird.

14. System, das mindestens eine Vorrichtung zum Internetzugang (2), eine Mehrzahl von über mindestens eine Vorrichtung zum Internetzugang (2) mit dem Internet (30) verbundenen Geräten (1), ein ebenfalls mit dem Internet (30) verbundenes Gateway (3) und einen Server (5) zur Verwaltung der Liste mit den zusätzlichen öffentlichen Netzadressen umfasst, wobei die Vorrichtung zum Internetzugang (2) und das Gateway zur Durchführung der Methode nach einem der vorhergehenden Ansprüche ausgestaltet sind, wenn ein Gerät (1) auf einen Internetdienst zugreifen möchte.

## Claims

1. A method for allocating a public network address to multiple pieces of equipment (1), each one of the pieces of equipment (1) having a private network address and being connected to the internet (30) via a router (2) able to perform a first network address translation, the method being **characterised in that** it comprises the implementation of the following steps when a piece of equipment (1) wants to access an internet service:
- determining if the said internet service is compatible with a second network address translation which could be performed by a gateway (3) connected to the internet (30);
- if there is internet service compatibility with the second network address translation:
∘ first translation of the private network address associated with the equipment (1) into one new private network address chosen amongst a list of private network addresses, that the router (2) of the equipment (1) has;
∘ communication between the router (2) and the gateway (3);
∘ second translation of the said new private network address of the equipment (1) into a public network address chosen amongst a list of public network addresses, that the gateway (3) has;
- if there is no compatibility of the internet service with the second network address translation:
∘ first translation of the private network address of the equipment (1) into a public network address chosen amongst a list of additional public network addresses shared between the routers (2) of the said multiple equipment (1).

2. A method according to the preceding claim, wherein the private network address associated with the equipment (1), the said new private network address and the addresses from the list of additional public network addresses are IPv4 or IPv6 addresses.

3. A method of allocating a public network address to multiple pieces of equipment (1), each one of the pieces of equipment (1) having a private network address and being connected to the internet (30) via a router (2) able to perform with a first network address translation, the method being **characterised in that** it comprises the implementation of the following steps when a piece of equipment (1) wants to access an internet service:
- determining if the said internet service is compatible with a second network address translation which could be performed by a gateway (3) connected to the internet (30);
- if there is compatibility of the internet service with the second network address translation:
∘ tunnelling of the exchanged data flow to access the said internet service between the router (2) of the equipment (1) and the gateway (3);
∘ second private network address translation of the equipment (1) into a public network address chosen amongst a list of public network addresses, that the gateway (3) has;
- if there is no compatibility of the internet service with the second network address translation:
∘ first translation of the private network address of the equipment (1) into a public network address chosen amongst a list of additional public network addresses shared between the routers (2) of the said multiple equipment (1).

4. A method according to the preceding claim, wherein the private network address associated with the equipment (1) and the addresses from the list of additional public network addresses are IPv4 or IPv6 addresses.

5. A method according to claim 4, wherein the said tunnelling step comprises the encapsulation of IPv4 packets transiting between the router (2) and the gateway (3) into IPv6 packets.

6. A method according to one of the preceding claims, wherein the router (2) of each piece of equipment (1) has a list of internet services that are non-compatible with the said second network address translation, the step of determining if the said service is compatible with the said second network address translation, consisting of checking that the service that the equipment (1) wants to access is not present in the said list of non-compatible internet services.

7. A method according to claim 6, wherein the router of each piece of equipment (1) has at least one software sensor able to identify at least one type of internet service.

8. A method according to one of the claims 6 or 7, additionally comprising an additional step of triggering an alert and/or data record in a history of events by the router (2) of a piece of equipment (1) when the said piece of equipment (1) does not achieve accessing a service, determined however as compatible, with the second network address translation.

9. A method according to claim 8, wherein the step of triggering an alert and/or data record in a history of events is accompanied by the addition in the said list of non-compatible internet services with the said second network address translation of the internet service having triggered the alert.

10. A method according to claim 8, wherein the router (2) of each piece of equipment (1) is a device for internet access offered by an internet access supplier, the step of triggering an alert and/or data record in a history of events is accompanied by the notification of the internet service having triggered the alert to a server (4) of the internet access supplier.

11. A method according to claim 10, wherein the list of internet services that are not compatible with the said second network address translation is regularly updated by the said server (4) of the access supplier, the list updated from non-compatible internet services, comprising the internet service(s) notified to the server (4) of the access supplier.

12. A method according to one of the preceding claims, wherein the first private network address translation of the equipment (1) into a public network address chosen amongst a list of additional public network addresses shared between the routers (2) of the said multiple equipment (1) comprises the opening of a new internet connection between the router (2) of the equipment (1) and a server (6) indicated by a server (5) managing the list of additional public network addresses.

13. A method according to one of the preceding claims, wherein the router (10) is able to establish a connection to the internet (30) via a main network (20) or via an alternative network (21), the step of the first private network address translation of the equipment (1) into a public network address chosen amongst a list of additional public network addresses shared between the routers (2) of the said multiple equipment (1) being retried via the alternative network (20) in case of failure via the main network (20).

14. A system comprising at least one device for internet access (2), multiple equipment (1) connected to the internet (30) via at least one device for internet access (2), a gateway (3) also connected to the internet (30), and a server (5) for managing the list of additional public network addresses, the device for internet access (2) and the gateway being configured to implement the method according to one of the preceding claims when a piece of equipment (1) wants to access an internet service.
